# EUROPEAN PATENT SPECIFICATION

(11) **EP 0 309 232 B1**
(45) Date of publication and mention of the grant of the patent: **19.01.1994**
(21) Application number: 88308773.6
(22) Date of filing: 21.09.1988
(51) Int. Cl.: G11B 11/10, G11B 27/36

(54) **Optical information recording and reproducing apparatus**
Optisches Informationsaufzeichnungs und -wiedergabegerät
Appareil d'enregistrement et de reproduction d'information optique

(30) Priority: 21.09.1987 JP 236756/87
(43) Date of publication of application: 29.03.1989
(73) Proprietor: SHARP KABUSHIKI KAISHA, Osaka 545 (JP)
(72) Inventor: Yoshida, Yoshio, Tenri-shi Nara-ken (JP); Ogata, Nobuo, Tenri-shi Nara-ken (JP); Ishii, Mitsuo, Yamatokoriyama-shi Nara-ken (JP); Kurata, Yukio, Tenri-shi Nara-ken (JP); Nakata, Yasuo, Tenri-shi Nara-ken (JP); Inoue, Teruaki, deceased (JP)
(74) Representative: Brown, Kenneth Richard

(56) References cited:
- US-A- 3 731 290
- PATENT ABSTRACTS OF JAPAN vol. 11, no. 248 (P-604)(2695) 13 August 1987, & JP-A-62 54857 (CANON) 10 March 1987,
- PHILIPS TECHNICAL REVIEW. vol. 42, no. 2, August 1985, EINDHOVEN NL pages 37 - 47; HARTMANN ET AL: "ERASABLE MAGNETO-OPTICAL RECORDING"

## Description

The present invention relates to a recording and reproducing arrangement, and more particularly to an optical information recording and reproducing apparatus such as a magneto-optical disc apparatus or the like, which effects recording and reproducing of signals with respect to a magneto-optical recording medium through utilization of magneto-optical effects.

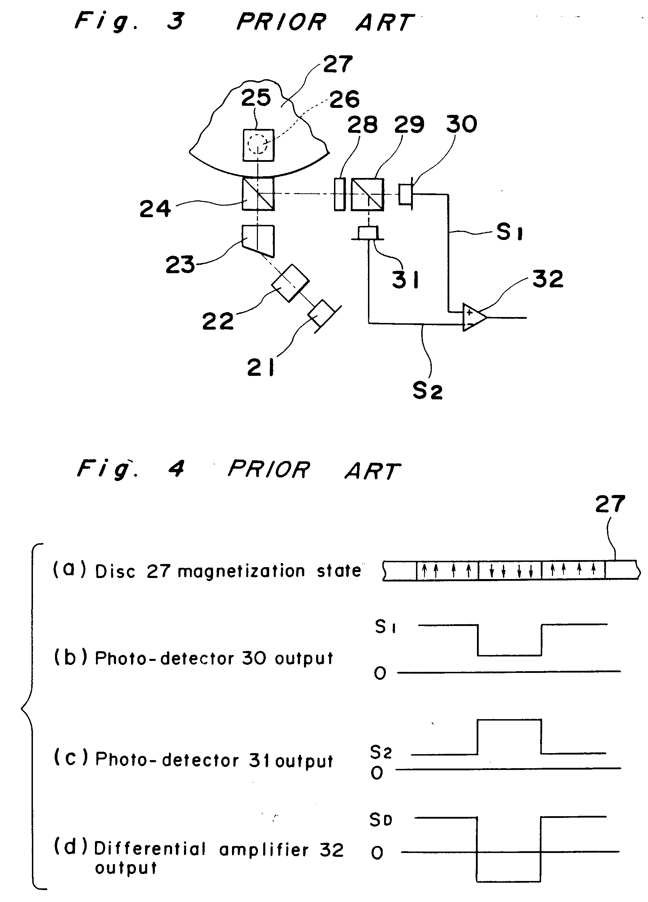

Conventionally, optical information recording and reproducing apparatus of the type referred to above have been arranged as shown in Fig 3. Light emitted from a semi-conductor laser source 21 is incident upon a beam splitter 24 via a collimating lens 22 and a shaping prism 23. Substantially linearly polarized light, perpendicular to an optical axis and parallel to the paper surface, is transmitted through the beam splitter 24. The light transmitted through the beam splitter 24 is incident upon an objective lens 26 via a mirror 25, and projected as a focused spot onto a disc 27 to effect the recording function. The disc 27 comprises the magneto-optical recording medium. Alternatively, during the reproducing function, light projected onto the disc 27 is subjected to magneto-optical effects and is reflected from the disc, through the objective lens 26 and the mirror 25 towards the beam splitter 24 so as to be reflected by said beam splitter 24. The reflected light is incident upon a polarizing beam splitter 29 through a 1/2 wavelength plate 28, and split into two directions to be incident upon photo-detectors 30 and 31. The light rays incident upon photo-detectors 30 and 31 correspond to the magnetizing direction of the disc 27 as shown in Fig. 4(a), and are converted into information signals S₁ and S₂. The information signals S₁ and S₂ are electrical signals as shown in Figs. 4(b), and 4(c) so as to be applied to a differential amplifier 32. Thus, the signals are taken out as an information signal S_{D} amplified two times. Noise components having the same phase are cancelled as shown in Fig. 4(d), and the reproduction of the recorded information is effected by reproducing the information signal S_{D}.

For detecting recording errors during recording using the conventional optical information recording and reproducing apparatus as described above, it is known to use the reproducing function as referred to above. Another practice for detecting errorS employs two light fluxes, one for recording and the other for reproduction following the light flux used for recording, etc.

Examples of convention optical information recording and reproducing apparatus can be found in US Patent US 3,731,290 and in the Patent Abstracts of Japan, Vol. 11, No. 248 (P-604)(2695) 13 August 1987, relating to Japanese Patent application JP-A-62 54857.

However, in the former methods as described above, a time period approximately equal to that for recording is required to effect the reproduction for checking for erroneous recording. More specifically, for example, in the case where the magneto-optical recording medium is in the form of a disc, a time period equivalent to one rotation of the disc is required for the detection of recording errors. Thus, recording at high speeds in a short period of time is not possible or at least it is made very difficult.

In the latter practice, since the two light fluxes are adapted to be focused onto the same point on the magneto-optical recording medium, an optical system having high accuracy is required. Moreover, different driving circuits are respectively necessary for driving the two light sources, and thus such problems as complicated construction and consequently large size apparatus occur.

An object of the present invention is to alleviate at least some of the afore-mentioned problems.

The present invention provides an optical information recording and reproducing apparatus comprising a light source, means for directing light from said light source onto a magneto-optical recording medium to permit information recording by the selective change of the magnetisation state on the medium, analyzing means for dividing light reflected from the medium during recording into different polarisation components, photo-detecting means for generating respective electrical signals representative of said divided polarisation components, and subtracting means for subtracting said respective electrical signals one from the other, characterised by a waveform shaping means comprising a full wave rectifier for adjusting the output waveform of said subtracting means and a comparing means for comparing the output signal of said waveform shaping means with a preliminary set threshold value.

An advantage of the invention is that it provides an optical information recording and reproducing apparatus which is capable of detecting recording errors whilst simultaneously recording data thereby reducing recording time, without requiring a particularly high accuracy optical system, avoiding complicated construction and consequently large sized optical system.

Another advantage of the present invention is that it provides an optical information recording and reproducing apparatus of the above described type, which has stable operation and is highly reliable, and can be readily manufactured at low cost.

In an arrangement according to the present invention, during recording, light emitted from the light emitting means is focused onto the magneto-optical recording medium by the focusing means. The temperature at the recording portion of the magneto-optical recording medium is then raised above its Curie temperature. The recording portion raised above the Curie temperature loses its magnetized state, and is then magnetized in the direction of an external magnetic field to effect recording of information. Contemporaneously, light reflected from the magneto-optical recording medium is separated by the analyzing means into light signals in two directions, corresponding to the magnetizing direction in the magneto-optical recording medium. The light thus separated is converted into electrical signals by the corresponding photo-detecting means. The information signals obtained from the photo-detecting means are subtracted from each other by the subtracting means, and thereafter, adjusted by the waveform shaping means. The output from the waveform shaping means is subsequently compared with the preliminarily set threshold value by the comparing means. Thus, by observing the value of the output signal of the waveform shaping means with respect to the threshold value, the presence of errors during recording can be determined.

More specifically, since the recording portion of the magneto-optical recording medium has lost its magnetized state during recording as described above, the reflected light from the recording portion is not subjected to the magneto-optical effect. Accordingly, the output signals from the above two photo-detecting means have the same absolute value, and the outputs of the subtracting means and the waveform shaping means become zero. Alternatively, when the recorded portion of the magneto-optical recording medium is in the magnetized state, the reflected light from said portion is subjected to the magneto-optical effect, and the output subtracting means shows a predetermined value. Thereby, through comparison of the output of the waveform shaping means with the threshold value by the comparing means, it may be judged whether or not the recording is correctly effected. Since the above judging function is effected simultaneously with the recording function, the recording function can be effected at higher speeds than previously achieved with known optical recording and reproducing apparatus.

These and other objects and features of the present invention will become apparent from the following description taken in conjunction with the preferred embodiment thereof with reference to the accompanying drawings, in which;
Fig. 1 is a schematic diagram showing the general construction of an optical information recording and reproducing apparatus according to a preferred embodiment of the present invention,
Fig. 2(a) is a diagram for explaining the state of magnetization of a disc employed in Fig. 1,
Figs. 2(b), 2(c) and 2(d) are timing charts showing output signals of photo-detectors and a full wave rectifier corresponding to Fig. 2(a),
Fig. 3 is a schematic diagram showing the general construction of a conventional optical information recording and reproducing apparatus (already referred to),
Fig. 4(a) is a diagram for explaining the state of magnetization of a disc employed in Fig. 3 (already referred to), and
Figs. 4(b), 4(c) and 4(d) are timing charts showing output signals of photo-detectors and a differential amplifier corresponding to Fig. 4(a) (already referred to).

Before the description of the present invention proceeds, it is to be noted that like parts are designated by like reference numerals throughout the accompanying drawings.

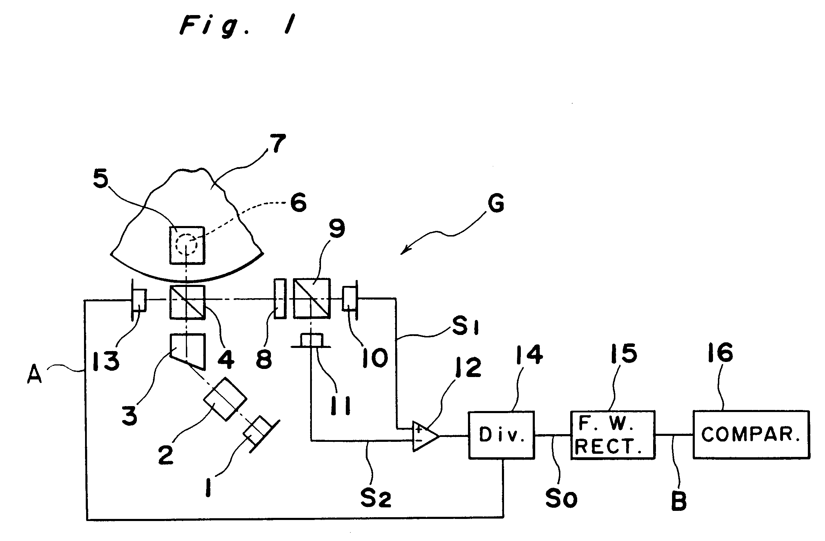

Referring now to the drawings, there is shown in Fig. 1, an optical information recording and reproducing apparatus G according to one preferred embodiment of the present invention, which generally includes a semi-conductor laser source 1 as a light emitting means for emitting laser light, a collimating lens 2 provided to convert the light emitted from the semi-conductor laser source 1 into parallel light, a shaping prism 3 for converting the parallel light as obtained by the collimating lens 2 into a light flux which may be regarded as in Gaussian distribution and a beam splitter 4 for much more transmitting P wave when the polarized light parallel to the paper surface is represented as the P wave than that perpendicular to the paper surface is denoted as S wave, of the polarized light perpendicular to the optical axis in the light flux as obtained by said shaping prism 3, and also for reflecting the reflection light from the disc 7 for a magneto-optical recording medium, obtained through an objective lens 6 as a focusing means and a mirror 5 so as to change the advancing direction of said reflection light. The mirror 5 is for reflecting the transmitted light from the beam splitter 4 towards the disc 7 therebelow, and the objective lens 6 is to collect light forwarded from the mirror 5 for projection onto the recording portion of the disc 7 as a focused spot.

The optical information recording and reproducing apparatus G further includes a 1/2 wavelength plate 8 provided in an optical path of the reflection light from the disc 7, proceeding through the objective lens 6, the mirror 5 and the beam splitter 4 so that its crystal axis is inclined at 22.5° with respect to the direction of the P wave and disposed perpendicular to the optical axis, a polarizing beam splitter 9 as an analyzing means for taking out the light obtained through said 1/2 wavelength plate 8 as divided into the P wave component and the S wave component, photo-detectors 10 and 11 as a photo-detecting means for converting the light divided by the polarizing beam splitter 9 into electrical signals, a differential amplifier 12 as a subtracting means for receiving output signals of the photo-detectors 10 and 11 to take out the difference between the both signals, another photo-detector 13 for detecting the light amount of the reflection light incident upon the beam splitter 4 from the shaping prism 3, a divider 14 for dividing the output of said differential amplifier 12 by the output of said photo-detector 13, a full wave rectifier 15 as a waveform shaping means for subjecting the output of said divider 14 to full wave rectification, and a comparator 16 as a comparing means for comparing the output of said full wave rectifier 15 with a preliminarily set thereshold value, all of which are coupled with each other as shown.

In the above arrangement, during recording function of the information, light emitted from the semi-conductor laser source 1 is corrected into the parallel light by the collimating lens 2, and is further converted by the shaping prism 3 into the light flux regarded to be of Gaussian distribution in the light intensity distribution. The light flux emitted from the shaping prism 3 is incident upon the beam splitter 4, and in the P wave perpendicular to the optical axis and parallel to the paper surface and the S wave which is the polarized light perpendicular to the paper surface, much more of the P wave is transmitted through the beam splitter 4. After being altered in its advancing direction downwards by the mirror 5, the light transmitted through the beam splitter 4 is collected by the objective lens 6, thereby to be projected onto the recording medium portion of the disc 7 as the focused spot.

At the recording medium portion of the disc 7, the magnetization easy axis is directed perpendicularly to the film surface of the recording medium portion, with said portion being preliminarily magnetized in a predetermined direction. Thus, by receiving the light energy of the focused light spot, the temperature of the recording medium portion is raised above Curie temperature, and the state of magnetization at said portion disappears. Then, when the state of light irradiation is released as the focused light spot is shifted, the portion at which the state of magnetization has disappeared is magnetized in the direction opposite to that in the initial magnetization by the external magnetic field, and thus, recording of information is effected.

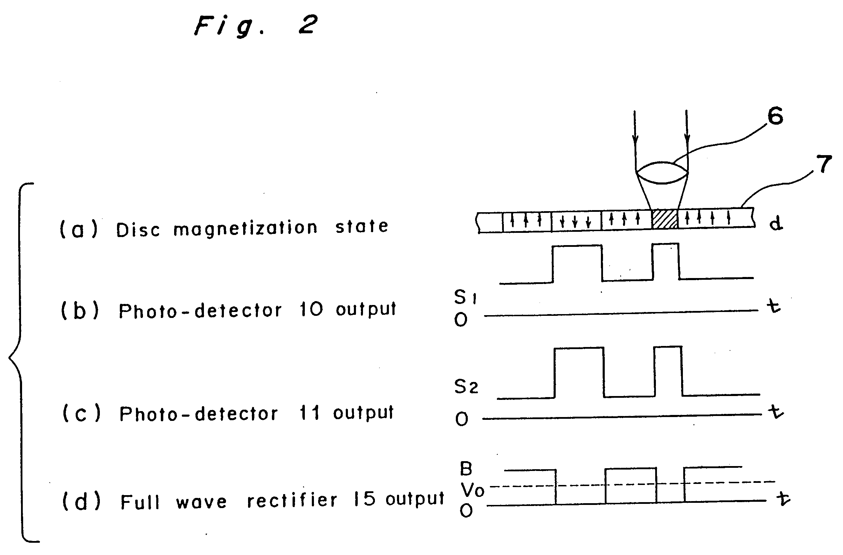

Subsequently, the light projected onto the disc 7 proceeds to the objective lens 6, the mirror 5, and the beam splitter 4, and is reflected by said beam splitter 4. The above reflected light is incident upon the polarizing beam splitter 9 through the 1/2 wavelength plate 8 so as to be taken out as it is divided into the P wave component and the S wave component. These divided light fluxes are respectively incident upon the photo-detectors 10 and 11 so as to be converted into electrical signals, and are taken out as signals in opposite phases e.g. a signals S₁ shown in Fig. 2(b) and a signal S₂ shown in Fig. 2(c), according to the direction of magnetization on the disc 7 as illustrated in Fig. 2(a). These signals S₁ and S₂ are outputted as signals amplified two times as they are inputted to the differential amplifier 12, and applied to the divider 14.

On the other hand, during recording function, part of the light emitted by the semi-conductor laser source 1 is reflected by the beam splitter 4 so as to be incident upon the photo-detector 13. The light incident upon the photo-detector 13 is converted into an electrical signal, and is supplied to the divider 14 as a light intensity signal A proportional to the intensity of light from the semi-conductor laser source 1. Thus, by using this light intensity signal A as a denominator input, division of the above signals S₁ and S₂ is effected. The output signal S₀ of the divider 14 is adjusted to the waveform of a full wave rectification by the full wave rectifier 15 and is taken out as a signal B to be judged as shown in Fig. 2(d). This signal B to be judged is compared with the preliminarily set threshold value V₀ similarly shown in Fig. 2(d) by the comparator 16, thereby to check whether or not the recording function has been positively effected, with the recording bit at the disc 7 having reached Curie temperature.

More specifically, at timing to effect inversion of magnetization when recording is to be effected, the focused light spot having comparatively large energy is projected onto the recording medium portion of the disc 7, with the state of magnetization at the recording medium portion having disappeared. Therefore, at the time point where the focused light spot is projected, no magneto-optical effect takes place. Accordingly, the signals S₁ and S₂ come to be in the same level in their absolute values, and the output signal of the differential amplifier 12, the output signal S₀ of the divider 14 and the signal B to be judged of the output of the full wave rectifier 15 become zero respectively. Meanwhile, since the portion to be recorded at the recording medium portion of the disc 7 is in the magnetized state, the output signal of the differential amplifier 12, the output signal S₀ of the divider 14, and the signal B to be judged, for the output of the full wave rectifier 15 as obtained from the reflection light at said portion, show predetermined values. Therefore, by comparing the signal B to be judged with the threshold value V₀ at the comparator 16, it is possible to judge whether or not the recording is normally effected. In Fig. 2(d), the portion lower than the threshold value V₀ is the portion recorded.

On the other hand, at timing not to effect inversion of magnetization when recording is to be effected, light set to such an intensity as will not produce the magnetization inversion at the recording medium portion on the disc 7, i.e. as will not cause the recording medium portion to reach Curie temperature, is emitted from the semi-conductor laser source 1. This light is projected onto the recording medium portion of the disc 7, and is reflected in the form of light inclined in the azimuth angle by the magneto-optical effect, and is incident upon the differential amplifier 12 through the similar passage as above so as to be taken out from the differential amplifier 12 as the information signal for the reproduction.

It should be noted here that, in the foregoing embodiment, although the output signal of the photo-detector 13 is used for the denominator input of the divider 14, in the case where the semi-conductor laser source 1 is made, for example, by a laser diode, the output signal of a photo-diode for output monitoring, incorporated in the laser diode may be utilized for the purpose. Similarly, it may be so modified to use the sum signal of the output signals S₁ and S₂ of the photo-detectors 10 and 11, or to omit the divider 14.

As is clear from the foregoing description, the optical information recording and reproducing apparatus according to the present invention includes the light emitting means, the focusing means for collecting light emitted from said light emitting means onto the magneto-optical recording medium for raising temperature at the recording portion of said magneto-optical recording medium above Curie temperature so as to magnetize the recording portion in the direction of external magnetic field, thereby to effect recording of information, the analyzing means for separating the light reflected from the magneto-optical recording medium into polarization components in two directions corresponding to magnetizing direction in the magneto-optical recording medium, corresponding photo-detecting means for converting the separated light components into electrical signals so as to obtain reproduction signal from the information signal thus obtained, and subtracting means for subtracting the information signal obtained by the respective photo-detecting means during recording function. The optical information recording and reproducing apparatus is characterized in that there are further provided the waveform shaping means for adjusting the waveform of output signal from said subtracting means, and the comparing means for comparing the output signal of said waveform shaping means with the prelimiarily set threshold value.

Therefore, recording errors may be detected simultaneously with the recording function, without inviting complication in the construction and size increase of the optical system, and also, without requiring particular high accuracy in the optical system, and thus, reduction of recording time can be advantageously achieved.

## Claims

1. An optical information recording and reproducing apparatus comprising a light source (1), means for directing light from said light source (1) onto a magneto-optical recording medium (7) to permit information recording by the selective change of the magnetisation state on the medium, analyzing means (9) for dividing light reflected from the medium (7) during recording into different polarisation components, photo-detecting means (10, 11) for generating respective electrical signals representative of said divided polarisation components, and subtracting means (12) for subtracting said respective electrical signals one from the other, characterised by a waveform shaping means comprising a full wave rectifier (15) for adjusting the output waveform of said subtracting means (12) and a comparing means (16) for comparing the output signal of said waveform shaping means (14, 15) with a preliminary set threshold value.

2. An optical information recording and reproducing apparatus as claimed in claim 1, wherein said light emitting means (1) is a semiconductor laser source.

3. An optical information recording and reproducing apparatus as claimed in claim 1, wherein said focusing means (6) is an objective lens.

4. An optical information recording and reproducing apparatus as claimed in claim 1, wherein said analyzing means (9) is a polarizing beam splitter.

5. An optical information recording and reproducing apparatus as claimed in claim 1, wherein said photo-detecting means (10, 11) is of photo-detectors.

6. An optical information recording and reproducing apparatus as claimed in claim 1, wherein said subtracting means (12) is a differential amplifier.

## Patentansprüche

1. Optisches Informationsaufzeichnungs- und -wiedergabegerät, mit einer Lichtquelle (1), einer Einrichtung zum Leiten des Lichts von der Lichtquelle (1) auf ein magnetooptisches Aufzeichnungsmedium (7), um die Aufzeichnung von Information durch selektives Verändern des Magnetisierungszustands auf dem Medium zu ermöglichen, einer Analysiereinrichtung (9) zum Teilen des von dem Medium (7) während der Aufzeichnung reflektierten Lichts in unterschiedliche Polarisationskomponenten, einer Photodetektoreinrichtung (10,11) zum Erzeugen jeweiliger elektrischer Signale, die repräsentativ für die geteilten Polarisationskomponenten sind, und einer Subtrahiereinrichtung (12) zum Subtrahieren der jeweiligen elektrischen Signale voneinander,
**gekennzeichnet durch**
eine Wellenform-Formeinrichtung mit einem Vollweggleichrichter (15) zum Einstellen der Ausgangswellenform der Subtrahiereinrichtung (12) und einer Vergleichseinrichtung (16) zum Vergleichen des Ausgangssignals der Wellenform-Formeinrichtung (14,15) mit einem vorläufigen eingestellten Schwellenwert.

2. Optisches Informationsaufzeichnungs- und -wiedergabegerät nach Anspruch 1, bei dem die lichtemittierende Einrichtung (1) eine Halbleiterlaserquelle ist.

3. Optisches Informationsaufzeichnungs- und -wiedergabegerät nach Anspruch 1, bei dem die Fokussiereinrichtung (6) eine Objektivlinse ist.

4. Optisches Informationsaufzeichnungs- und -wiedergabegerät nach Anspruch 1, bei dem die Analysiereinrichtung (9) ein Polarisierungsstrahlenteiler ist.

5. Optisches Informationsaufzeichnungs- und -wiedergabegerät nach Anspruch 1, bei dem die Photodetektoreinrichtung (10,11) aus Photodetektoren besteht.

6. Optisches Informationsaufzeichnungs- und -wiedergabegerät nach Anspruch 1, bei dem die Subtrahiereinrichtung (12) ein Differenzverstärker ist.

## Revendications

1. Appareil d'enregistrement et de reproduction d'information optique comprenant une source lumineuse (1), un moyen pour orienter la lumière provenant de ladite source lumineuse (1) sur un milieu d'enregistrement magnéto-optique (7), pour permettre l'enregistrement d'une information par la variation sélective de l'état d'aimantation sur le milieu, un moyen d'analyse (9) pour diviser une lumière réfléchie par le milieu (7) durant l'enregistrement, en différentes composantes de polarisation, un moyen de photodétection (10, 11) pour produire des signaux électriques respectifs, représentant lesdites composantes de polarisation divisées et un moyen de soustraction (12) pour soustraire lesdits signaux électriques respectifs les uns des autres, caractérisé par un moyen de formation de forme d'onde, comprenant un redresseur pleine onde (15) pour ajuster la forme d'onde de sortie dudit moyen de soustraction (15) et un moyen de comparaison (16) pour comparer le signal de sortie dudit moyen de formation de forme d'onde (14, 15) avec une valeur de seuil déterminée au préalable.

2. Appareil d'enregistrement et de reproduction d'information optique selon la revendication 1, dans lequel ledit moyen d'émission lumineuse (1) est une source laser à semiconducteur.

3. Appareil d'enregistrement et de reproduction d'information optique selon la revendication 1, dans lequel ledit moyen de focalisation (6) est une lentille d'objectif.

4. Appareil d'enregistrement et de reproduction d'information optique selon la revendication 1, dans lequel ledit moyen d'analyse (9) est un diviseur de faisceau polarisant.

5. Appareil d'enregistrement et de reproduction d'information optique selon la revendication 1, dans lequel ledit moyen de photodétection (10, 11) est constitué de photodétecteurs.

6. Appareil d'enregistrement et de reproduction d'information optique selon la revendication 1, dans lequel ledit moyen de soustraction (12) est un amplificateur différentiel.
